# EUROPEAN PATENT SPECIFICATION

(11) **EP 1 031 480 B1**
(45) Date of publication and mention of the grant of the patent: **24.11.2004**
(21) Application number: 99301434.9
(22) Date of filing: 26.02.1999
(51) Int. Cl.: B60R 25/04

(54) **Vehicle usage control and security apparatus**
Fahrzeugbenutzungskontrolle und Sicherheitsvorrichtung
Appareil de sécurité et de contrôle d'utilisation d'un véhicule

(43) Date of publication of application: 30.08.2000
(73) Proprietor: Inova Designs Limited, London W5 1AG (GB)
(72) Inventor: Amirkhanian, Vachaghan, "Casa Blanca", Urb.Rivierea Del Sol, 29649 Mijas Costa (ES)
(74) Representative: Harris, Ian Richard

(56) References cited:
- EP-A- 0 790 161
- WO-A-98/31574
- US-A- 4 624 578
- US-A- 4 805 722
- US-A- 5 510 780

## Description

The present invention relates to the control of vehicle usage. The invention finds particular application to the rental of vehicles and for controlling the usage of rental vehicles.

A constant source of problems for vehicle rental companies is the failure of persons renting vehicles promptly to return those vehicles at the end of a rental contract. The failure to return the vehicle can be as a result of the person renting the vehicle simply continuing to use the vehicle beyond the end of the period of the rental contract. Alternatively, this may be as a result of the theft of the vehicle by the vehicle renter, or by a third party.

US-A-4 805 722 describes an anti theft vehicle system comprising a card reader 22 and a computer control 26 in a vehicle. Computer control 26 compares its own vehicle ID number and the date and time to that contained on a magnetic card, and can, on the basis of that comparison, disable the ignition, block fuel to the engine and block access under the hood of the vehicle (column 2, lines 27 to 31). In particular, US-S-4 805 722 discloses a vehicle usage control apparatus comprising a control unit connectable to operating components of the vehicle, the control unit being configured to receive a validation device progammable with programmable parameters including a validation code and a time parameter , the control unit being operable to respond to the validation code to validate the validation device for enabling operation of the vehicle and to respond to the time parameter of the validation device to cause immobilisation of the vehicle at a time determined by the time parameter.

US-A-5 510 780 describes a time cycled security code activation system but does not discuss the provision of any form of validation device.

EP-A-0 790 161 teaches a vehicle anti-theft method and device in which data restricting a vehicles operation, saved on a mobile storage medium, may be updated in a charging station which can be inside or outside the vehicle. In either case, the charging station must be connected to a central unit via, for example, a mobile radio network. When dating the data on the mobile storage medium an authorisation and identification code must be entered, which are compared with the codes saved on the mobile storage medium.

US-A-4 624 578 discloses a rental contract timer system comprising a display module 16 with a slot 20 into which cards are inserted. This document teaches that when a card is removed from slot 20, the information stored thereon should be erased so as to prevent subsequent use.

The electronic vehicle immobilisation system described in WO 98 31574 A comprises a fixed control unit 1, a removable control panel 2 and a remote electronic key 3. The control panel 2 is configured to be removable, so that it may be presented to an appropriate authority for revalidation (for example of vehicle MOT, tax or insurance). Electronic key is used to enable to user to identify themselves to the system.

An aim of the present invention is to improve the control of the rental of rented goods such as motor vehicles.

### SUMMARY OF THE INVENTION

Particular and preferred aspects of the invention are set out in the accompanying independent and dependent claims. Combinations of features from the dependent claims may be combined with features of the independent claims as appropriate and not merely as explicitly set out in the claims.

In accordance with a first aspect of the invention, there is provided a vehicle usage control apparatus comprising a control unit connectable to operating components of the vehicle, the control unit being configured to receive a validation device programmable with programmable parameters including at least one validation code and at least one time parameter, the control unit being operable to respond to the validation code to validate the validation device for enabling operation of the vehicle and to respond to the time parameter of the validation device to cause disablement or immobilisation of the vehicle at a time determined by the time parameter, and the control unit being operable to record usage parameters on the validation device.

In order to be able to operate the vehicle, it is therefore necessary for the user to be in possession of a valid validation device and for the programmed time parameter(s) to indicate that vehicle usage is permitted. A time parameter could be programmed as a termination time, or as a duration from a starting time, as desired. A validation code and a time parameter could be programmed from a computer by, for example a vehicle rental office, prior to handing over the vehicle to the user. One or more validation codes and one or more time parameters may be provided.

Where the time parameter defines the end of a rental period, whether in terms of a duration from a start time or in terms of an end time, the control unit can be responsive to the time parameter to immobilise the vehicle following the end of the rental period.

In order to avoid immobilisation of a vehicle when it is actually being driven, which could be dangerous, the control unit can be operable to immobilise the vehicle at the first attempt to start the vehicle following the end of the of the rental period.

Immobilisation could also be effected following a grace period after the end of the rental period. The duration of the grace period could be determined by a grace period parameter programmed on the validation device, with the control unit being operable to read the grace period parameter from the validation device.

During the grace period, and/or possibly during a period prior to expiry of the rental period, the control unit can be operable to warn a user of the impending expiry of a time period and of the impending immobilisation of the vehicle.

The control unit can be operable at the time determined by the time parameter to invalidate a validation device received by the control unit by overwriting the validation code of the validation device, whereby the vehicle cannot be restarted.

The control unit can also be operable to activate an alarm device at a time determined by the time parameter. The operation of an alarm device can be particularly effective where the failure to return the vehicle at the end of the rental period is as a result of theft of the vehicle. It can also serve so to embarrass the renter of the vehicle as to cause him or her to cease further use of the vehicle. The alarm device could comprise an audible and/or visible alarm device. Alternatively, or in addition, the alarm device could comprises a radio location beacon to facilitate location of the vehicle by the rental company.

Preferably, the control unit is configured as an add-on device mountable in a vehicle and connectable to the vehicle systems. Alternatively, the control device could be integrated into the vehicle systems.

The control unit could be connectable to a starter of a vehicle for enabling and disabling operation of the vehicle by respectively enabling and disabling the starter.

The control unit could additionally, or alternatively, be connectable to the ignition system or a fuel pump of a vehicle for enabling and disabling operation of the vehicle by respectively enabling and disabling the ignition system and/or a fuel pump of the vehicle.

In a preferred embodiment the control unit is configured to receive a validation device in the form of a chip card and comprises means for reading a chip card. A chip card (also known as a smart card or IC card or chip card) enables the storage of parameters, with control logic as required, in recordable media on a card.

The usage parameters could include one or more of distance driven, maximum speed and journey time parameters.

The invention also provides for the combination of a control unit and a validation device. The validation device comprises a recordable medium and is preferably configured as a chip card. The validation device can optionally be programmable with additional programmed parameters, such as one or more of vehicle ownership, current user, usage contract, user preference parameters and pulse duty cycles for audible and visual indicators.

A validation device for vehicle usage control apparatus as described above can hold at least a validation code and a time parameter readable by the control unit.

According to a further aspect of the invention, there is provided a method of controlling the usage of a rental vehicle, comprising:
initially programming a validation device with at least a validation code and a time parameter and associating the validation device with a vehicle usage control unit; and then
the control unit reading the validation code and the time parameter from the validation device, enabling operation of the vehicle where the validation code is valid, and subsequently disabling operation of the vehicle at a time dependent upon the time parameter.

In an embodiment of the invention, the disabling of the vehicle can be achieved as a result of the control unit cancelling the validation code.

### BRIEF DESCRIPTION OF THE DRAWINGS

Exemplary embodiments of the present invention will be described hereinafter, by way of example only, with reference to the accompanying drawings in which like reference signs relate to like elements and in which:
Figure 1 provides an overview for explaining the operation of an embodiment of the present invention;
Figure 2 is an exemplary implementation of an embodiment of the present invention;
Figure 3 illustrates aspects of the implementation of Figure 2 in more detail;
Figure 4 is a schematic representation of a control unit for an embodiment of the present invention;
Figure 5 illustrates data stored in a memory component of a chip card for an embodiment of the present invention;
Figure 6 illustrates the comparison of time values in an embodiment of the present invention; and
Figure 7 is a flow diagram illustrating the operation of an embodiment of the present invention.

### DESCRIPTION OF THE PREFERRED EMBODIMENTS

An exemplary embodiment of the present invention will be described hereinafter, by way of example only. An embodiment of the present invention relates to vehicle usage control apparatus for controlling the use of a vehicle. The apparatus provides a control unit which is mountable or integratable within a vehicle and co-operates with a validation device in order to enable usage of the vehicle under controlled conditions.

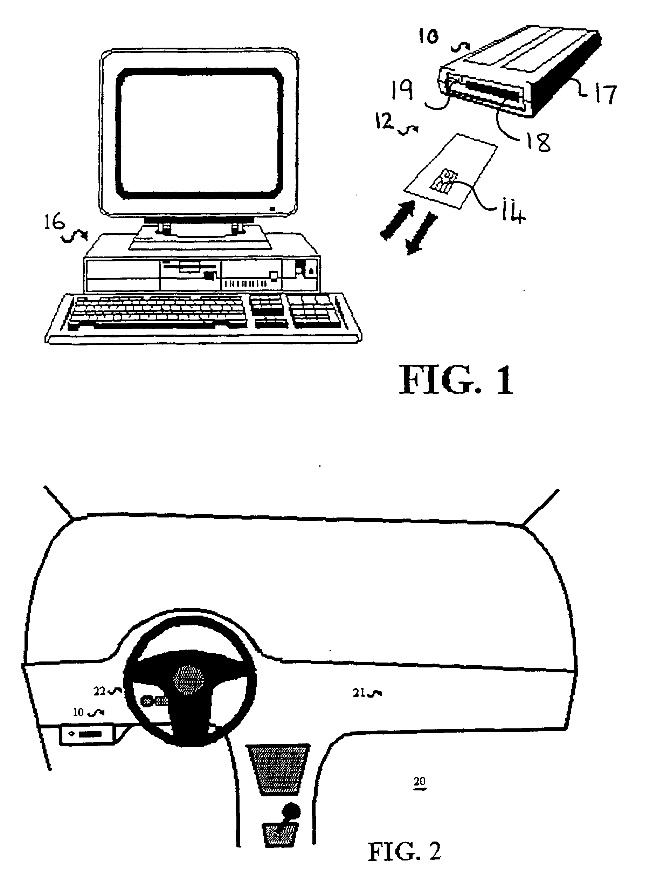

Figure 1 schematically illustrates a possible external configuration of a control unit 10 in combination with a validation device 12 in the form of a chip card, or smart card, comprising an electronic chip 14 within a standard sized chip card. Also illustrated in Figure 1 is a personal computer 16, which can be configured to include a chip card writer for writing information to the chip 14 on the chip card 12 and optionally for reading information from the chip card 12. As shown in Figure 1, the control unit 10 comprises a housing 17, with a chip card receiving slot 18 for receiving the chip card 12 and a light emitting diode 19 for indicating operating states of the unit 10.

Figure 2 is a schematic representation of the installation of the control unit 10 under the dashboard 21 of a vehicle 20. Also illustrated in Figure 2 is an ignition key mounted in an ignition switch 22 adjacent to the steering column of the vehicle 20.

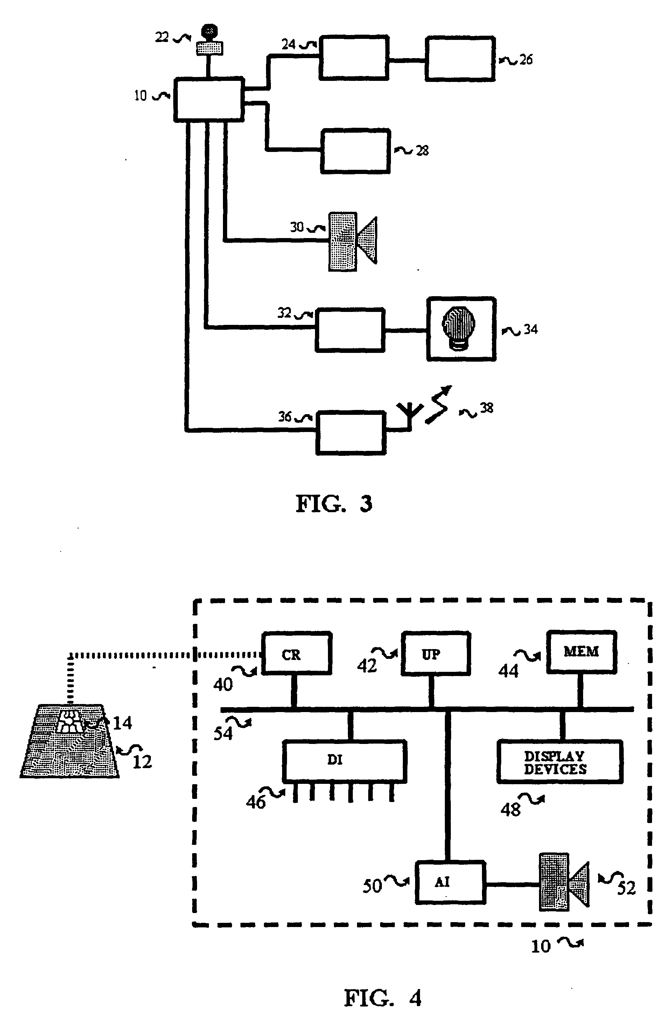

When installed within a vehicle, the control unit 10 is connected to various systems of the vehicle. Thus, for example, as illustrated in Figure 3, the control unit 10 can be connected to the ignition switch 22 for selectively enabling or disabling operation of the ignition switch 22. Alternatively, or in addition, the control unit 10 can be connected to an ignition circuit 24 for selectively enabling or disabling operation of the ignition circuit 24 for providing ignition signals to the engine 26 of the vehicle 20. Alternatively, or in addition, the control unit 10 can be controlled to a starter circuit 28 for selectively enabling or disabling the operation of the starter circuit 28 within the vehicle 20. Through the selective control of the ignition switch 22, and/or the ignition circuit 24, and/or the starter circuit 28 and/or other control devices within the vehicle, for example a fuel pump (not shown), the control unit 10 can be used selectively to enable operation of the vehicle and/or to disable operation of the vehicle thereby providing selective immobilisation of the vehicle.

The control unit 10 can additionally be connected to various alarm and signalling devices forming part of or located within the vehicle. Thus, for example, the control unit 10 can be connected to an audible alarm, such as the horn of the vehicle, or alternatively a separate alarm sounder (not shown). Alternatively, or in addition, the control unit 10 can be connected to lighting circuits 32 of the vehicle for selectively causing lights 34 of the vehicle to be illuminated. The lights 34 could comprise indicator and/or hazard warning lights and/or parking and/or driving lights. Alternatively, or in addition, the control unit 10 can be connected to a radio beacon device 36 for emitting a radio location signal 38 for enabling location of the vehicle 20.

The control unit 10 can be configured as a separate device which can be added to a vehicle and be connected to the vehicle systems. Alternatively, the control unit 10 could be formed as an integral component within the vehicle 20.

Figure 4 is a schematic overview of an exemplary configuration of the control unit 10. The control unit 10 as illustrated in Figure 4 comprises a microprocessor based unit implemented on one or more circuit boards within the housing 17 of the control unit 10. A card reader 40 is aligned with the receiving slot 18 for receiving a chip card 12 and for reading from and/or writing to the chip 14 on the card 12. The card reader 40 is connected via a bus 54 to other components within the control unit 10. Also connected to the bus 54 is a microprocessor 42 operable in response to control code contained within a memory 44. The memory 44 can comprise read only and/or random access memory for the storage of pre-programmed control data and/or programmable data.

Indeed, in a typical embodiment, the memory 44 will comprise read only memory for pre-programmed information and programmable memory for variable information.

Also connected to the bus 54 is a device interface 46 which is connected to various devices external to the control unit as, for example, illustrated in Figure 3. In the particular example illustrated, it is assumed that discrete connections are provided to the individual components, such as is illustrated in Figure 3. However, depending on the particular configuration of the vehicle, this may be varied. For example, if the car comprises components which are connected via a bus, rather than conventional wiring looms, then the device interface could provide an interface to that bus and could use the appropriate messaging protocol of the bus for communicating with the various vehicle devices.

Also shown connected to the bus 54 are one or more display devices 48. These could comprise one or more LEDs (e.g., LED 19 illustrated in Figure 1), but could also comprise alphanumeric and/or other display devices. Also, as an alternative, or in addition, a separate display device could be provided in a separate display unit (not shown) within the view of the driver of the vehicle for displaying messages to the driver of the vehicle.

Also shown in Figure 4 is an audio interface 50 connected to the bus 54. This in turn is connected to a loudspeaker for playing audio messages and/or audible warning tones. As an alternative to providing an internal loudspeaker 52, the audio interface could be connected to the audio system of the vehicle for using the audio system of the vehicle to play audio messages and/or warning tones to the driver of the vehicle.

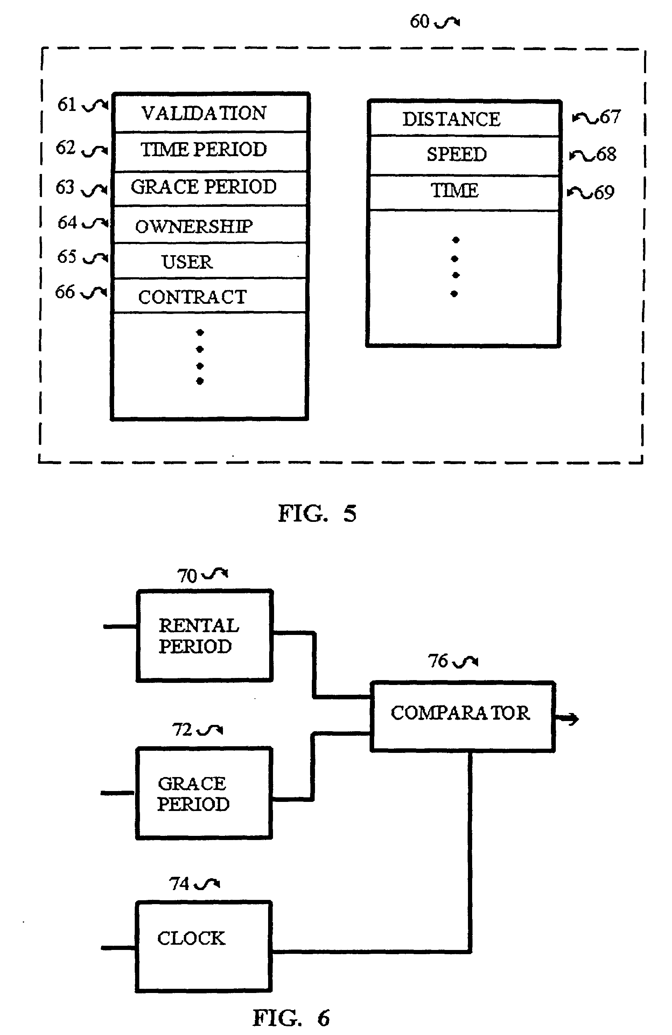

In operation of the apparatus as shown in Figures 1 - 4, various data are programmed into the memory of the chip 14 by the personal computer 16, which data form programmable parameters for controlling the usage of the vehicle. As shown in Figure 5, the memory 60 of the chip card 12 can be programmed with a validation code 61 for validating the chip card and a time parameter 62 for defining an operable period of the rental vehicle. Other information which can be programmed within the memory 60 of the chip 14 can include a grace period 63, details of the ownership 64 of the vehicle, details of the current user 65 of the vehicle, and details regarding the rental contract 66, by way of example only. Other possible examples are pulse time parameters for audible and visual indicators. The memory 60 in the chip card 14 can also be used for recording information regarding the usage of the vehicle including, for example, the distance driven 67, the speed (maximum and/or average) 68 of the vehicle and the journey time 69, by way of example only. These usage characteristics will be stored on the chip card by the control unit 10 during operation of the vehicle.

Further details of the way in which the information described above is actually used, will be given in the following description of the use of the present apparatus.

Figure 6 is a schematic overview of a comparison performed by a comparison unit 76 (which may be in the form of control code) contained within the memory 44 for controlling the operation of the microprocessor 42. In a preferred embodiment of the invention, at least selected data stored in the memory 60 of the chip card is read by the card reader 40 and is stored in the memory 44 under control of the control code by the microprocessor 42. Thus, for example, in Figure 6, the time period parameter 62 is read into a memory location 70 within the memory 44 as a rental period parameter. Also, the grace period 63 is read into a storage location 72 as a grace period parameter. A comparison unit 76 (which can be formed by a control code or, by a hardware comparator) is operable to compare the rental period parameter to real time as defined by a clock function 74 of the control unit 10. The clock function 74 can be a software function of the microprocessor, or could be configured as a separate hardware clock. The rental period parameter 70 can be defined in terms of a date and time at which the rental period expires, or could be defined as a duration from a start time (e.g., one day, one week, etc.). When the comparator function 76 determines that the rental period has ended, it then causes various actions to be undertaken, as will be described in the following. Optionally, following the end of the rental period, the comparator 76 can be responsive to a grace period 72 for providing an additional grace period over and above the rental period, as will also be described in the following.

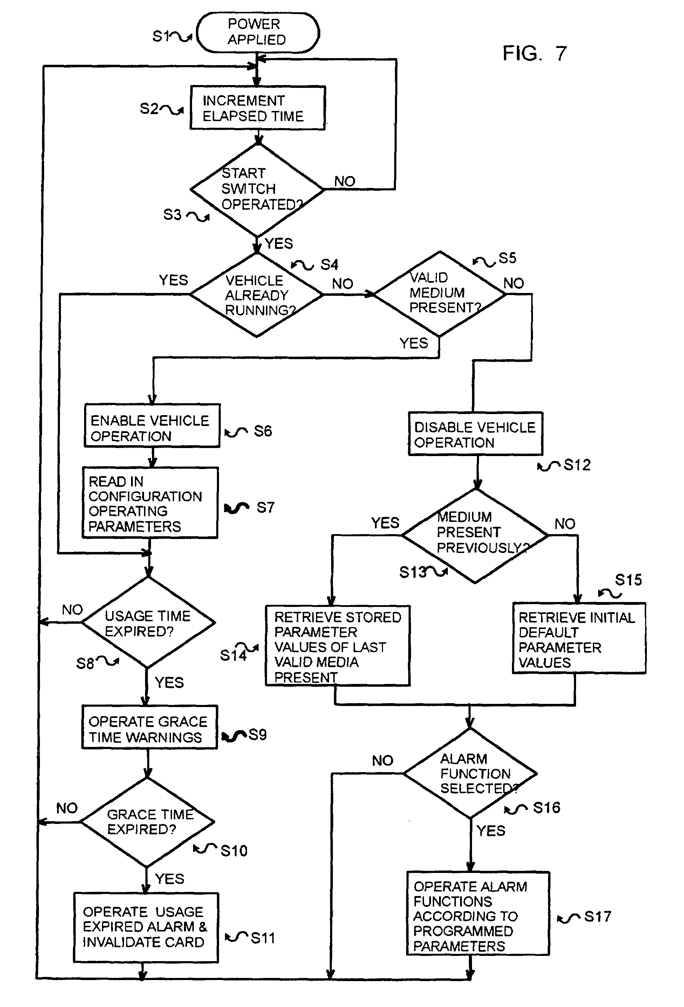

Figure 7 is a flow diagram illustrating a mode of operation of the apparatus described with reference to Figures 1-6. As shown in Figure 7, when power is supplied (step S1) to the control unit 10, logic is operable to increment an elapsed time count (step S2). The logic described with reference to Figure 7 can be implemented in the form of control code held in the memory 44 and operable to control the operation of the microprocessor 42.

In step S3, the logic is operable to test whether the start switch has been operated. If not, control passes back to step S2.

If the start switch has been operated, then in step S4, a check is made whether the vehicle is already running. If the vehicle is not already running, then a check is made in step S5 that a valid validation device 12 is present. This is achieved by reading and validating the validation code 61 from the memory 60 of the chip card 12. If a valid validation device is present, then operation of the vehicle is enabled in step S6. In step S7, configuration operating parameters which are programmed into the memory 60 of the chip card 12 (including, but not only, the time parameter 62), are read into the memory 44 of the control unit 10. Control then passes to step S8. If, in step S4, the vehicle is determined already to be running, then control passes directly to step S8. In step S8, then comparator function 76 of Figure 6 is operable to determine whether the usage time as defined by the time parameter 62 and stored in the rental period location 70 has already expired. If not, control passes back to step S2.

Alternatively, control then passes to step S9 where grace time warnings can be effected. The grace warnings can be in the form of audible and/or visual warnings using the audio interface 50 and/or the display devices 48 referred to with reference to Figure 4. In step S10, a further check is made as to whether the grace period as defined by the grace period parameter 63 has expired. If not, control passes to step S2.

If the grace time period has expired, then in step S11, a usage expired alarm is activated and the card is invalidated by overwriting or deleting the validation code 61 on the card. Control then passes back to step S2.

Returning to step S5, if a valid validation device is not present, then, in step S12, the operation of the vehicle is disabled. This can be effected by selectively disabling one or more of the ignition switch 22, the starter circuit 28, the ignition circuit 24, the fuel pump and/or any other control circuits of the vehicle which are provided to enable selective disabling of that vehicle. In step S13, a check is made whether a validation device was previously present. If yes, then in step S14, the last stored parameter values of the most recent valid validation device is retrieved from the memory 44 of the control unit 10. If there is no record of a validation device having previously been present in step S13, then in step S15, initial default parameter values are retrieved from the memory 44 of the control unit 10. In step S16, a test is made whether an appropriate alarm function has been selected. If an alarm function has been selected, then the appropriate alarm is activated in step S17 according to the program parameters. The alarm function could be the activation of an audible alarm such as the horn 30, the activation of one or more lighting circuits 32, and/or the transmission of a radio location signal 38. If no alarm function has been selected in step S16, or following step S17, control passes back to step S2.

It can thus be seen that an embodiment of the invention provides an intelligent programmable apparatus for controlling the usage of a vehicle, with additional security features being programmable by means of a recordable data medium (such as a chip or smart card) containing the values of the parameters being programmed into the card by means of a discrete computer. The parameters can include a maximum permitted time of vehicle usage and an additional "grace period", after which the unit invalidates the card. Without the presence of a valid validation device in the control unit 10, the vehicle is rendered immobile and optionally various alarm functions can also be activated. As described above, the control unit can also store information regarding the usage of the vehicle, such as times, distances and speeds. Optionally, various additional operating parameters for user convenience features may be programmed (e.g., settings for an air conditioning unit and/or other electronic systems). Thus, an embodiment of the invention can provide an intelligent programmable apparatus for controlling the usage of a vehicle, while providing additional security and optional user convenience features.

The control unit can be implemented as a vehicle-mounted unit containing microprocessor-controlled timing functions and immobilising circuitry and equipped with a reader (or optionally a reader/writer) for removable data storage media such as a chip card (smart card, IC card, memory card), or a magnetic card, as well as optional alarm circuitry. A separate computer system allows programming of the data storage media with desired sets of operating parameter values for controlling timing, immobilisation of the vehicle and optional alarm functions, for transferral to the vehicle-mounted control unit. Additional data regarding vehicle usage may also be stored on the media, such as journey times and distances, fuel consumption and maximum speeds, by way of example only.

The apparatus may be optionally provided for additional user convenience features, such as allowing the storage of various electronically settable vehicle parameters or for a vehicle to be started at predetermined times by the same apparatus.

In the absence of a valid data storage medium (e.g., a chip card), the apparatus has the ability to render the vehicle immobilised, and during this state, vehicle alarms may also be activated if attempts are made to operate the vehicle. Additionally, the unit may also activate a beaconing device to aid location of the vehicle. Immobilisation may be achieved by various means commonly in use, such as by disabling various parts of the vehicle's propulsion system by means of electrical switches (such as relays) or mechanical actuators, in a manner which will be well understood by a person skilled in the art. The immobilisation is controlled by the internal microprocessor, according to the parameters read in from a valid, programmed validation device (e.g., a program data storage medium). A newly-installed apparatus, which has never been programmed by means of a smart card, will hold the vehicle immobile and will activate alarm functions according to a set of initial default parameters contained within the apparatus, should attempts be made to operate the vehicle. The manner in which the vehicle immobilisation is effected ensures that immobilisation of the vehicle will not occur during actual use, but that immobilisation merely occurs following a period of use on the next attempt to restart the vehicle.

As described above, the exemplary microprocessor-based vehicle security and electronic system apparatus typically consists of a vehicle mounted control unit 10 with a card reader/writer, visual indicators such as one or more light emitting diodes (LEDs), audible indicators or sounders and relays. The immobilise function uses the internal microprocessor to count down (e.g., step S2) the elapsed rental time (e.g., step S8) and following that, an optional grace period (e.g., step S17), before actually immobilising the vehicle. For safety reasons, as indicated above, the apparatus will not stop a vehicle while it is running. The elapsed rental time is counted continually (e.g., step S4) irrespective of whether the vehicle is in operation or whether the validation device 12 is present or not. During the grace period, the audible and/or visual indicators can be activated (e.g., step S15). In the simple example where a LED 19 is provided on the control unit, this can be caused to flash. Alternatively, or in addition, through the use of the audio interface 50 and the speaker 52, the control unit can be caused to "beep". These indications signal the end of the allowed usage period to the user. When the allowed rental time (and optionally the grace period) have both expired, any attempts to restart the vehicle will prove unsuccessful and, in accordance with programmed parameters, can cause alarm indicators to be operated (e.g., steps S16 and S17). An example of such an alarm indicator can be flashing of the vehicle lights and pulsing of the vehicle's horn. The various timing parameters pertaining to the pulsing of the audible and visual indicators, vehicle horn and hazard lights, can all be configurable according to preferences of the rental company and can be applied to the apparatus either via additional parameters stored within the memory 60 of the chip card and/or be pre-programmed into the memory 44 (preferably into a non-volatile portion thereof) of the control unit 10. As indicated in Figure 7, in step S15, at least initial default parameter values are pre-programmed into the memory 44 of the control unit 10. Additional and/or operating parameters can be stored in the memory 60 of the chip card 12 by means of software running on a discrete computer system (e.g., the computer system 16 of Figure 1) provided with an appropriate media programmer.

As described above, in a preferred embodiment of the invention, the control unit 10 is additionally operable to write information to the chip card 12, including the ability to overwrite and thus invalidate cards, preventing further usage of those cards (e.g., step S11). Attempts to operate the vehicle without the presence of a valid chip card will be prevented (e.g., step S12), again with the operation of alarms being activated (e.g., steps S16 and S17). As described above, for newly-fitted units which have never been configured by means of a recordable media card, built in, factory set default parameters (e.g., step S15) are used to control the immobilisation and alarm functions.

By means of the card recording functions, the chip card may also be used to record information about customer usage of the vehicle, such as the distance driven during the rental period, the maximum speed driven, and journey times, thus assisting in assuring compliance with rental control terms and local laws.

After both the rental period and the grace period end, the unit monitors the state of the vehicle's activation switch (e.g., an ignition key). Once it detects that the vehicle is not operating (e.g., step S4), the control unit prevents attempts to restart the vehicle (e.g., step S12). As described above, this may be typically implemented by interrupting an ignition current or a fuel pump by means of relays, or interrupting motor supply current in electrically powered vehicles. Alarm functions (e.g., step S16/S17) may be activated, for example utilising relays to flash the vehicle's lights and intermittently sound the horn (where provided). Additionally, the control unit 10 can also activate a radio beaconing device 36, if fitted, to assist in location of the vehicle. Both the rental and grace periods are programmed by the vehicle rental company into the recordable medium (e.g., the chip card 12) by means of software running on the computer 16 fitted with the suitable media reader/writer. Each recordable card can be programmed with unique identification and validation codes at the commencement of the rental period. The identification information can typically include ownership (e.g., the rental company), user and contract identification data. The identification and validation codes are verifiable by the control unit 10 to prevent another card or an expired card being accepted by that control unit during the rental period. In addition, the vehicle rental company could have pre-programmed cards for internal use, allowing the rental company to override any unit's current parameters on a temporary basis, providing unrestricted uses of the vehicle for various purposes, such as routine maintenance.

For vehicles equipped with relevant electronically-controlled propulsion, environmental and entertainment systems, it is possible to extend the functionality to provide for rental customers' preferences regarding various mechanical and environmental parameters by programming such parameters into the chip cards. Any changes in customer preferences could be saved by customers on individual cards and then stored in the rental company's computer system for future use by the customer. Examples of possible operation would be to enable automatic starting of the vehicle at predetermined times in readiness for journeys or to keep vehicles in optimal functional condition while in storage, and storing of driver and passenger seat positions, climate control settings and/or radio station presets.

Thus, there has been described a control unit for controlling the usage of apparatus over a time period is configured to receive a validation device programmable with programmable parameters, including a validation code and a time parameter. The control unit is operable to respond to the validation code to validate the validation device for enabling operation of the apparatus and to respond to the time parameter of the validation device to cause disabling of the apparatus at a time determined by the time parameter. The invention finds particular application to the control of a vehicle during a rental period, the control unit being responsive to a time parameter to immobilise the vehicle following the end of the rental period. A grace period following the end of the rental period may also be programmed into the validation device. For safety reasons, the immobilisation of the vehicle is prevented while the vehicle is operating, but restarting of the vehicle is prevented on the first and subsequent occasions following the expiry of the appropriate time period. Additional parameters may be programmed into the validation device, which can be in the form of a chip card or other recordable medium.

Although a particular embodiment has been described in the foregoing, it will be appreciated that many additions and/or modifications may be made within the scope of the present invention.

Thus, for example, although reference has been made specifically to the usage of a vehicle, it should be understood that the present invention may be used to control the use of any controllable device which may be supplied for use for a predetermined period, including, for example, equipment rented by a plant or tool hire company, or other application where control over the temporary usage of a piece of equipment is desired. Thus, it is envisaged that a control unit may be a control unit connectable to operating components of an apparatus for controlling usage of that apparatus, the control unit being configured to receive a validation device programmable with programmable parameters including a validation code and a time parameter, the control unit being operable to respond to the validation code to validate the validation device for enabling operation of the apparatus and to respond to the time parameter of the validation device to cause disabling of the apparatus at a time determined by the time parameter.

Although reference has been made to the use of a chip card as a validation device, alternative validation devices may be used, including, for example, a magnetic card or indeed any other medium which is capable of transferring data from a rental company's computer to a vehicle usage control unit 10, such that the data may be received and processed by the control unit 10.

Also, although a microprocessor-based system has been described, it will be appreciated that the functionality of the control unit 10 could be implemented by means of special purpose hardware such as, for example, one or more programmable circuits such as discrete timers, or logic integrated circuits or application specific integrated circuits (ASICs).

Accordingly, it will be appreciated that the particular example described herein is intended to be illustrative only, and not limitative.

## Claims

1. Vehicle usage control apparatus comprising a control unit (10) connectable to operating components of the vehicle (20), the control unit being configured to receive a validation device (12) programmable with programmable parameters including a validation code (61) and a time parameter (62), the control unit being operable to respond to the validation code to validate the validation device for enabling operation of the vehicle and to respond to the time parameter of the validation device to cause immobilisation of the vehicle at a time determined by the time parameter, and wherein the control unit is operable to record usage parameters on the validation device.

2. Vehicle usage control apparatus according to claim 1, wherein the time parameter defines the end of a rental period, the control unit being responsive to the time parameter to immobilise the vehicle following the end of the rental period.

3. Vehicle usage control apparatus according to claim 2, wherein the control unit is operable to immobilise the vehicle at the first attempt to start the vehicle following the end of the of the rental period.

4. Vehicle usage control apparatus according to claim 2, wherein the control unit is operable to immobilise the vehicle after a grace period following the end of the rental period.

5. Vehicle usage control apparatus according to claim 4, wherein the validation device is programmable with a grace period parameter (63) defining the grace period, the control unit being operable to read the grace period parameter from the validation device.

6. Vehicle usage control apparatus according to any preceding claim, wherein the control unit is operable to warn a user of the impending expiry of a time period.

7. Vehicle usage control apparatus according to any preceding claim, wherein the control unit is operable at the time determined by the time parameter to invalidate a validation device received by the control unit by overwriting the validation code of the validation device.

8. Vehicle usage control apparatus according to any preceding claim, wherein the control unit is further operable to activate an alarm device at a time determined by the time parameter.

9. Vehicle usage control apparatus according to claim 8, wherein the alarm device comprises an audible (30) and/or visible (32) alarm device.

10. Vehicle usage control apparatus according to claim 8 or claim 9, wherein the alarm device comprises a radio location beacon (38).

11. Vehicle usage control apparatus according to any preceding claim, wherein the control unit is mountable in a vehicle for connection to vehicle systems.

12. Vehicle usage control apparatus according to claim 11, wherein the control unit is connectable to a starter of a vehicle for enabling and disabling operation of the vehicle by respectively enabling and disabling the starter (28).

13. Vehicle usage control apparatus according to claim 11 or claim 12, wherein the control unit connectable to the ignition system of a vehicle for enabling and disabling operation of the vehicle by respectively enabling and disabling the ignition system (24) of the vehicle.

14. Vehicle usage control apparatus according to any preceding claim, wherein the control unit is configured to receive a validation device in the form of a chip (14) card and comprises means for reading a chip card.

15. Vehicle usage control apparatus according to any one of claims 1 to 14, wherein the control unit is configured to receive a validation device in the form of a magnetic card and comprises means for reading a magnetic area on the card.

16. Vehicle usage control apparatus according to claim 1, wherein the usage parameters include at least one of distance driven (67), maximum speed (68) and journey time (69) parameters.

17. Vehicle usage control apparatus according to any preceding claim, further comprising a said validation device.

18. Vehicle usage control apparatus according to claim 17, wherein the validation device comprises a recordable medium.

19. Vehicle usage control apparatus according to claim 17 or claim 18, wherein the validation device is a chip (14) card.

20. Vehicle usage control apparatus according to any preceding claim wherein the validation device is programmable with additional programmed parameters.

21. Vehicle usage control apparatus according to claim 20, wherein the additional programmed parameters include at least one of vehicle ownership (64), current user (65), usage contract (66) and user preference parameters.

22. A validation device for vehicle usage control apparatus system according to any preceding claim, the validation device holding at least a validation code and a time parameter readable by the control unit.

23. A validation device according to claim 22, comprising a recordable medium.

24. A validation device according to claim 22 or claim 23, wherein the validation device is a chip card.

25. A validation device according to any one of claims 22 to 24, programmable with additional programmed parameters.

26. A validation device according to claim 25, wherein the additional programmed parameters include at least one of vehicle ownership, current user, usage contract and user preference parameters.

27. A vehicle comprising vehicle usage control apparatus according to any one of claims 1 to 22.

28. A method of controlling the usage of a rental vehicle (20), comprising:
initially programming a validation device (12) with at least a validation code (61) and a time parameter (62) and associating the validation device with a vehicle usage control unit (10); and then
the control unit reading the validation code and the time parameter from the validation device, enabling operation of the vehicle where the validation code is valid, recording usage parameters on the validation device, and subsequently disabling operation of the vehicle at a time dependent upon the time parameter.

29. A method according to claim 28, where the disabling of the vehicle is effected by the control unit cancelling the validation code.

## Patentansprüche

1. Fahrzeugbenutzungssteuergerät, das eine Steuereinheit (10) aufweist, die mit den Betriebskomponenten (20) des Fahrzeugs verbindbar ist, wobei die Steuereinheit dafür ausgelegt ist, eine Validierungseinrichtung (12), die mit programmierbaren Parametem einschließlich eines Validierungscodes (61) und eines Zeitparameters (62), programmierbar ist, aufzunehmen, wobei die Steuereinheit betreibbar ist, so daß sie auf den Validierungscode antwortet, um die Validierungsvorrichtung zu validieren für das Ermöglichen des Betriebs des Fahrzeugs, und um auf den Zeitparameter der Validierungsvorrichtung zu antworten, um die Ruhigstellung des Fahrzeugs zu einem Zeitpunkt, der durch den Zeitparameter bestimmt wird, zu veranlassen, und wobei die Steuereinheit derart betreibbar ist, daß sie die Verwendungsparameter auf der Validierungseinrichtung aufzeichnet.

2. Fahrzeugverwendungssteuervorrichtung nach Anspruch 1, wobei der Zeitparameter das Ende der Mietperiode festlegt, wobei die Steuereinheit auf den Zeitparameter reagiert, indem sie das Fahrzeug folgend auf das Ende der Mietperiode ruhigstellt.

3. Fahrzeugverwendungssteuervorrichtung nach Anspruch 2, wobei die Steuereinheit derart betreibbar ist, daß sie das Fahrzeug beim ersten Versuch, das Fahrzeug nach dem Ende der Mietperiode zu starten, ruhigstellt.

4. Fahrzeugverwendungssteuervorrichtung nach Anspruch 2, wobei die Steuereinheit derart betreibbar ist, daß sie das Fahrzeug nach einer Toleranzfrist nach dem Ende der Mietperiode ruhigstellt.

5. Fahrzeugverwendungssteuervorrichtung nach Anspruch 4, bei der die Validierungsvorrichtung mit einem Toleranzperiodenpararneter (63), der die Toleranzfrist festlegt, programmierbar ist, wobei die Steuereinheit derart betreibbar ist, daß sie den Toleranzparameter aus der Validierungsvorrichtung ausliest.

6. Fahrzeugverwendungssteuervorrichtung nach einem der vorherigen Ansprüche, wobei die Steuereinheit derart betreibbar ist, daß sie einen Benutzer vor dem nahenden Ablauf der Zeitperiode warnt.

7. Fahrzeugverwendungssteuervorrichtung nach einem der vorherigen Ansprüche, wobei die Steuereinheit derart betreibbar ist, daß sie zu dem Zeitpunkt, der durch den Zeitparameter bestimmt wird, eine Validierungsvorrichtung, die von der Steuereinheit empfangen wird, durch Überschreiben des Validierungscodes der Validierungsvorrichtung ungültig macht.

8. Fahrzeugverwendungssteuervorrichtung nach einem der vorherigen Ansprüche, wobei die Steuereinheit weiterhin derart betreibbar ist, daß sie eine Alarmvorrichtung zu einem Zeitpunkt, der durch den Zeitparameter festgelegt ist, aktiviert.

9. Fahrzeugverwendungssteuervorrichtung nach Anspruch 8, wobei die Alarmvortichtung eine hörbare (30) und/oder sichtbare (32) Alarmeinrichtung aufweist.

10. Fahrzeugverwendungssteuervonichtung nach Anspruch 8 oder Anspruch 9, wobei die Alarmvorrichtung ein Funkortungsgerät (38) aufweist.

11. Fahrzeugverwendungssteuervorrichtung nach einem der vorherigen Ansprüche, wobei die Steuereinheit in einem Fahrzeug für die Verbindung mit Fahrzeugsystemen montierbar ist.

12. Fahrzeugverwendungssteuervorrichtung nach Anspruch 11, bei dem die Steuereinheit mit einem Anlasser eines Fahrzeugs verbindbar ist für das Einschalten und Ausschalten des Fahrzeugbetriebs durch entsprechendes Einschalten und Ausschalten des Anlassers (28).

13. Fahrzeugverwendungssteuervorrichtung nach Anspruch 11 oder Anspruch 12, wobei die Steuereinheit mit dem Zündsystem des Fahrzeugs verbindbar ist für das Einschalten oder Ausschalten des Fahrzeugbetriebs durch entsprechendes Einschalten und Ausschalten des Zündsystems (24) des Fahrzeugs.

14. Fahrzeugverwendungssteuervomichtung nach einem der vorherigen Ansprüche, wobei die Steuereinheit derart konfiguriert ist, daß sie eine Validierungsvorrichtung in der Form einer Chipkarte (14) aufnimmt und eine Einrichtung für das Lesen einer Chipkarte aufweist.

15. Fahrzeugverwendungssteuervorrichtung nach einem der Ansprüche 1 bis 14, wobei die Steuereinheit dafür ausgelegt ist, eine Validierungsvorrichtung in der Form einer Magnetkarte aufzunehmen und eine Einrichtung für das Auslesen eines magnetischen Bereichs auf der Karte aufweist.

16. Fahrzeugverwendungssteuervorrichtung nach Anspruch 1, bei der die Verwendungsparameter zumindest einen der folgenden Parameter beinhalten: gefahrene Strecke (67), maximale Geschwindigkeit (68) und Reisedauer (69).

17. Fahrzeugverwendungssteuervorrichtung nach einem der vorherigen Ansprüche, die weiterhin eine der Validierungsvorrichtungen aufweist.

18. Fahrzeugverwendungssteuervorrichtung nach Anspruch 17, wobei die Validierungsvorrichtung ein beschreibbares Medium aufweist.

19. Fahrzeugverwendungssteuervorrichtung nach Anspruch 17 oder Anspruch 18, wobei die Validierungseinrichtung eine Chipkarte (14) ist.

20. Fahrzeugverwendungssteuervorrichtung nach einem der vorherigen Ansprüche, wobei die Validierungsvorrichtung mit zusätzlichen programmierten Parametern programmierbar ist.

21. Fahrzeugverwendungssteuervorrichtung nach Anspruch 20, wobei die zusätzlichen programmierten Parameter zumindest einen der folgenden Parameter beinhalten: Fahrzeugeigentümer (64), gegenwärtiger Benutzer (65), Nutzungsvertrag (66) und Nutzerpräferenz.

22. Validierungsvorrichtung für eine Fahrzeugverwendungssteuervorrichtung nach einem der vorherigen Ansprüche, wobei die Validierungsvorrichtung zumindest einen Validierungscode und einen Zeitparameter, die die Steuereinheit lesen kann, hält.

23. Validierungsvorrichtung nach Anspruch 22, die ein beschreibbares Medium aufweist.

24. Vatidierungseinrichtung nach Anspruch 22 oder Anspruch 23, wobei die Validierungsvorrichtung eine Chipkarte ist.

25. Validierungsvorrichtung nach einem der Ansprüche 22 bis 24, die mit zusätzlichen programmierten Parametern programmierbar ist.

26. Validierungsvorrichtung nach Anspruch 25, wobei die zusätzlichen programmierten Parameter zumindest einen der folgenden Parameter aufweisen: Fahrzeughalter, gegenwärtiger Nutzer, Nutzungsvertrag und Nutzerpräferenzen.

27. Fahrzeug, das eine Fahrzeugverwendungssteuervörrichtung gemäß einem der Ansprüche 1 bis 22 aufweist.

28. Verfahren zum Steuern der Verwendung eines Mietfahrzeugs (22), das aufweist:
ursprüngliches Programmieren einer Vafidierungsvorrichtung (12) mit zumindest einem Validierungscode (61) und einem Zeitparameter (62) und Verknüpfen der Validierungsvorrichtung mit einer Fahrzeugverwendungssteuereinheit (10), und dann
Auslesen des Validierungscodes und des Zeitparameters von der Validierungsvorrichtung durch die Steuereinheit, Ermöglichen des Betriebs des Fahrzeugs, wenn der Validierungscode gültig ist, Aufzeichnen der Benutzungsparameter auf der Validierungsvorrichtung und danach Abschalten des Betriebs des Fahrzeugs zu einem Zeitpunkt, der von dem Zeitparameter abhängt.

29. Verfahren nach Anspruch 28, wobei das Abschalten des Fahrzeugs durch die Steuereinheit bewirkt wird, die den Validierungscode annulliert.

## Revendications

1. Dispositif de commande d'utilisation de véhicule comprenant une unité de commande (10) pouvant être reliée à des composants fonctionnels du véhicule (20), l'unité de commande étant configurée pour recevoir un dispositif de validation (12) programmable à l'aide de paramètres programmables comprenant un code de validation (61) et un paramètre de temps (62), l'unité de commande pouvant être mise en oeuvre pour répondre au code de validation pour valider le dispositif de validation pour permettre le fonctionnement du véhicule et pour répondre au paramètre de temps du dispositif de validation pour provoquer l'immobilisation du véhicule à un moment déterminé par le paramètre de temps, et où l'unité de commande peut être mise en oeuvre pour enregistrer des paramètres d'utilisation sur le dispositif de validation.

2. Dispositif de commande d'utilisation de véhicule selon la revendication 1, dans lequel le paramètre de temps définit la fin d'une période de location, l'unité de commande répondant au paramètre de temps pour immobiliser le véhicule après la fin de la période de location.

3. Dispositif de commande d'utilisation de véhicule selon la revendication 2, dans lequel l'unité de commande peut être mise en oeuvre pour immobiliser le véhicule lors de la première tentative de démarrage du véhicule après la fin de la période de location.

4. Dispositif de commande d'utilisation de véhicule selon la revendication 2, dans lequel l'unité de commande peut être mise en oeuvre pour immobiliser le véhicule après un délai de grâce, après la fin de la période de location.

5. Dispositif de commande d'utilisation de véhicule selon la revendication 4, dans lequel le dispositif de validation est programmable à l'aide d'un paramètre de délai de grâce (63) définissant le délai de grâce, l'unité de commande pouvant être mise en oeuvre pour lire le paramètre de délai de grâce à partir du dispositif de validation.

6. Dispositif de commande d'utilisation de véhicule selon l'une quelconque des revendications précédentes, dans lequel l'unité de commande peut être mise en oeuvre pour avertir un utilisateur de l'expiration imminente d'un intervalle de temps.

7. Dispositif de commande d'utilisation de véhicule selon l'une quelconque des revendications précédentes, dans lequel l'unité de commande peut être mise en oeuvre au moment déterminé par le paramètre de temps pour invalider un dispositif de validation reçu par l'unité de commande en écrasant le code de validation du dispositif de validation.

8. Dispositif de commande d'utilisation de véhicule selon l'une quelconque des revendications précédentes, dans lequel l'unité de commande peut en outre être mise en oeuvre pour activer un dispositif d'alarme à un moment déterminé par le paramètre de temps.

9. Dispositif de commande d'utilisation de véhicule selon la revendication 8, dans lequel le dispositif d'alarme comprend un dispositif d'alarme audible (30) et/ou visible (32).

10. Dispositif de commande d'utilisation de véhicule selon la revendication 8 ou la revendication 9, dans lequel le dispositif d'alarme comprend une radio balise de localisation (38).

11. Dispositif de commande d'utilisation de véhicule selon l'une quelconque des revendications précédentes, dans lequel l'unité de commande peut être installée dans un véhicule en vue d'une connexion à des systèmes du véhicule.

12. Dispositif de commande d'utilisation de véhicule selon la revendication 11, dans lequel l'unité de commande peut être reliée à un démarreur d'un véhicule pour autoriser et interdire le fonctionnement du véhicule en activant et désactivant respectivement le démarreur (28).

13. Dispositif de commande d'utilisation de véhicule selon la revendication 11 ou la revendication 12, dans lequel l'unité de commande adaptée à être connectée au système d'allumage d'un véhicule pour autoriser et interdire le fonctionnement du véhicule en activant et désactivant respectivement le système d'allumage (24) du véhicule.

14. Dispositif de commande d'utilisation de véhicule selon l'une quelconque des revendications précédentes, dans lequel l'unité de commande est configurée pour recevoir un dispositif de validation sous la forme d'une carte à puce (14) et comprend un moyen destiné à lire une carte à puce.

15. Dispositif de commande d'utilisation de véhicule selon l'une quelconque des revendications 1 à 14, dans lequel l'unité de commande est configurée pour recevoir un dispositif de validation sous la forme d'une carte magnétique et comprend un moyen destiné à lire une zone magnétique sur la carte.

16. Dispositif de commande d'utilisation de véhicule selon la revendication 1, dans lequel les paramètres d'utilisation comprennent au moins un paramètre parmi les paramètres de distance parcourue (67), de vitesse maximum (68) et de temps de trajet (69).

17. Dispositif de commande d'utilisation de véhicule selon l'une quelconque des revendications précédentes, comprenant en outre un dit dispositif de validation.

18. Dispositif de commande d'utilisation de véhicule selon la revendication 17, dans lequel le dispositif de validation comprend un support enregistrable.

19. Dispositif de commande d'utilisation de véhicule selon la revendication 17 ou la revendication 18, dans lequel le dispositif de validation est une carte à puce (14).

20. Dispositif de commande d'utilisation de véhicule selon l'une quelconque des revendications précédentes, dans lequel le dispositif de validation est programmable à l'aide de paramètres programmés supplémentaires.

21. Dispositif de commande d'utilisation de véhicule selon la revendication 20, dans lequel les paramètres programmés supplémentaires comprennent au moins un paramètre parmi les paramètres de propriétaire de véhicule (64), d'utilisateur actuel (65), de contrat d'utilisation (66) et de préférences de l'utilisateur.

22. Dispositif de validation destiné à un système de dispositif de commande d'utilisation de véhicule conforme à l'une quelconque des revendications précédentes, le dispositif de validation contenant au moins un code de validation et un paramètre de temps pouvant être lus par l'unité de commande.

23. Dispositif de validation selon la revendication 22, comprenant un support enregistrable.

24. Dispositif de validation selon la revendication 22 ou la revendication 23, dans lequel le dispositif de validation est une carte à puce.

25. Dispositif de validation selon l'une quelconque des revendications 22 à 24, programmable à l'aide de paramètres programmés supplémentaires.

26. Dispositif de validation selon la revendication 25, dans lequel les paramètres programmés supplémentaires comprennent au moins un paramètre parmi des paramètres de propriétaire du véhicule, d'utilisateur actuel, de contrat d'utilisation et de préférences de l'utilisateur.

27. Véhicule comprenant un dispositif de commande d'utilisation de véhicule selon l'une quelconque des revendications 1 à 22.

28. Procédé de commande de l'utilisation d'un véhicule de location (20), comprenant :
la programmation initiale d'un dispositif de validation (12) avec au moins un code de validation (61) et un paramètre de temps (62) et l'association du dispositif de validation à l'unité de commande d'utilisation de véhicule (10) ; et ensuite
la lecture par l'unité de commande du code de validation et du paramètre de temps à partir du dispositif de validation, l'autorisation du fonctionnement du véhicule lorsque le code de validation est valide, l'enregistrement des paramètres d'utilisation sur le dispositif de validation et ensuite l'interdiction du fonctionnement du véhicule à un moment qui dépend du paramètre de temps.

29. Procédé selon la revendication 28, où la mise hors service du véhicule est effectuée par l'annulation par l'unité de commande du code de validation.
